# EUROPEAN PATENT SPECIFICATION

(11) **EP 3 778 528 B1**
(45) Date of publication and mention of the grant of the patent: **04.10.2023**
(21) Application number: 19191854.9
(22) Date of filing: 14.08.2019
(51) Int. Cl.: C04B 33/135, F23C 10/00, F23G 5/30

(54) **A GRANULAR CERAMIC MIXTURE**
KÖRNIGE KERAMISCHE MISCHUNG
MÉLANGE DE CÉRAMIQUE GRANULAIRE

(43) Date of publication of application: 17.02.2021
(73) Proprietor: Vecor IP Holdings Limited, Kowloon, Tsimshatsui (HK)
(72) Inventor: SEVERIN, Eric, Tsimshatsui, Hong Kong (HK); FERNANDEZ, Erwin, Tsimshatsui, Hong Kong (HK); MISA, John Vincent Adap, Tsimshatsui, Hong Kong (HK)
(74) Representative: Patent Boutique LLP

(56) References cited:
- CN-A- 108 191 401
- CN-B- 104 291 853
- US-A1- 2003 148 879

## Description

### Field of the invention

The present invention relates to the incorporation of fluid bed combustion fly ash, and especially circulating fluid bed combustion fly ash into a granular ceramic mixture.

### Background to the invention

### Fluid bed combustion (FBC) power plants versus pulverized coal combustion (PCC) power plants

Large quantities of fly ash are produced as a result of electricity generation and municipal waste incineration. This will continue into the foreseeable future. There is interest in how to utilise this fly ash waste material. Much fly ash is currently used in concrete as a pozzolan or cementitious material. Other uses include brick making and as a soil stabilisation material. However, much fly ash continues to go to landfill. This has obvious environmental, as well as economic, costs. There is therefore ongoing value and interest in developing products and processes that can use fly ash as a raw material. This minimises the amount of fly ash going to landfill and reduces the amounts of other virgin raw materials used.

The question of how to re-utilise the fly ash from power generation has become harder due to the introduction of fluidised bed combustion (FBC) technologies for thermal power generation and incineration. Fluidised bed combustion (FBC) plant designs are quite different to the pulverised coal combustion (PCC) plant designs that have been standard for power plants for many decades. The fly ash produced by FBC plants is different to PCC fly ash, and FBC fly ash is much harder than PCC fly ash to re-use in other applications such as ceramic production.

Fluidised bed combustors burn the coal in a heated fluidised bed of ash and/or sand at lower temperatures than PCC designs. Fluidised bed combustion (FBC) designs include "bubbling" fluidised beds as well as "circulating" fluidised bed designs. A bubbling fluid bed is also referred to as a "boiling fluid bed". Circulating fluidised beds, known as CFBs, are most common. The various FBC designs can be further divided based on the pressures at which they run, either atmospheric or pressurised.

Fluidised bed combustion (FBC) technology is becoming increasingly popular since plants using such technologies are less polluting. FBC plants emit much lower levels of nitrous oxides than conventional PCC plants, the removal of sulfur oxides is easier, and FBC plants can burn a wider range of fuels such as low-grade coal, and even fuels such as tyres and oil. Often these lower-grade fuels have a high sulfur content.

The solid/solid contact with hot particles in FBC plant designs gives very high heat exchange coefficients. This means that FBC plants can produce power efficiently at much lower temperatures: typically, between 800 - 900 °C, compared to 1400 - 1700 °C in a PCC plant. Being able to operate efficiently at lower combustion temperatures has large advantages. In particular, the formation of nitrous oxides is lower in FBC plants, and NOₓ pollution is therefore reduced.

The removal of sulfur oxides is also simpler in FBC plants as compared to PCC plants. Typically, PCC plants burn higher quality, lower sulfate coals such as anthracite. Typically, PCC plants have wet scrubbers which treat the exhaust gases to chemically remove the sulfur oxides via a process called flue gas desulfurisation (FGD). This is a costly and intensive process.

In contrast to PCC plants, FBC plants typically reduce their sulfur oxide emissions by burning a mixture of fuel and limestone/chalk/dolomite. The limestone material (calcium carbonate) forms calcium oxide within the fluidised bed. This reacts with sulfur oxides from the combustion of sulfur compounds in the fuel to form calcium sulfate *in-situ.* This is possible as the temperatures are low enough in the fluidised bed for calcium sulfate minerals such as anhydrite to be stable and readily formed.

Such reactions would not be possible in a PCC plant due to the high temperatures used. Hence their need for a separate FGD system.

The addition of limestone material to the coal to allow sulfur oxides to react *in-situ* is a much simpler process than having to scrub the flue gases.

### The differences between fluid bed combustion (FBC) fly ash and pulverised coal combustion (PCC) fly ash

The addition of significant amounts of limestone material to the boiler in a fluid bed combustion (FBC) plant means that the fluid bed combustion (FBC) fly ash typically comprises high levels of calcium species and sulfur species.

The levels of calcium species in FBC fly ash, usually reported as the equivalent calcium oxide level, are often higher than even high calcium oxide (Type C) fly ashes from PCC plants.

In addition, the levels of sulfur species in FBC fly ash, usually reported as the equivalent sulfur oxide level, are higher than the sulfur oxide level of PCC fly ash.

The ASTM-C618 standard is commonly used to define suitable fly ash quality for use as a pozzolan or cementitious product. The upper SO₃ limit for materials to meet ASTM-C618 is 5wt%. FBC fly ash typically comprises a much higher level of oxide of sulfur.

Physically, the fly ash from FBC designs is quite different to conventional PCC fly ash. The FBC fly ash has not been subjected to the very high temperatures encountered in the exhaust systems of conventional PCC plants. The fly ash produced in PCC plants has been suspended in the very hot effluent combustion gases. The temperatures experienced are high enough to melt particles. This means that the large majority of PCC fly ash particles are spherical and formed of glassy amorphous phases.

In contrast, fly ash from FBC plants, and especially CFB combustion plants, will not have been melted due to the lower temperatures of the FBC. As a result, the FBC fly ash particles have an irregular shape and do not contain glassy phases. Another difference is that the time for which the fly ash has been subjected to high temperatures is typically much longer in FBC plants, especially those plants where high levels of fly ash are recirculated, such as in a CFB combustion plant. This means, for example, that, whilst the iron in PCC fly ash is often present as magnetite and hematite, in FBC fly ash, and CFB combustion fly ash, it is mostly present as ferrite. This has major implications, for example, the ease of iron removal.

PCC and FBC fly ash are different chemically (e.g. typically having different levels of calcium species and sulfate species), different physically (e.g. typically having different morphologies, e.g. regular/glassy (PCC) compared to irregular/non-glassy (FBC)), and different mineralogically. FBC fly ash also has a smaller diameter than PCC fly ash (due to a self-grinding action) and has a lower residual carbon level compared to PCC fly ash.

### The problem of incorporating fluid bed combustion (FBC) fly ash, and especially circulating fluid bed (CFB) combustion fly ash, in a granular ceramic mixture

Most of the FBC fly ash is currently sent to landfill or used as a very low value soil stabilisation agent. It is less effective than PCC fly ash as a pozzolan. In addition, the high sulfate levels can cause problems. There is an urgent need to find alternative uses for FBC fly ash, for example in ceramic articles such as ceramic floor tiles and porcelain tiles.

Fly ash can be used as a partial replacement for clays in ceramic articles. Fly ash can be combined with clay and other materials such as feldspar to form granular ceramic mixtures. The granular ceramic mixtures can then be formed into ceramic articles, such as ceramic tiles and especially porcelain tiles. Such ceramic articles can be made with significant levels of fly ash and this is known in the art.

The replacement of clay by fly ash is beneficial as supplies of suitable clay are becoming limited. Maximising the practical level of clay that can be replaced by fly ash is beneficial.

However, the fly ashes used in the art are mostly PCC fly ash. FBC, and particularly CFB combustion, technology is a relatively recent development, and was not in use when earlier ceramic art was developed. Hence issues relating specifically to the use of FBC fly ash in ceramics applications was not recognised, or even relevant, to most of this body of fly ash work. For example, when fly ash is described in the art as consisting of spheres of amorphous, glassy phases. It is clear that the art is referring to PCC fly ash.

The inventors have discovered that simply replacing PCC fly ash with FBC fly ash, and especially CFB combustion fly ash in ceramic compositions that also contain clays, feldspars and optionally other ingredients, can cause defects. Ceramic articles made using FBC fly ash have been observed to crack during the heating stage of the firing cycle. This is particularly problematic when making high quality, large ceramic items such as ceramic floor tiles, and especially porcelain floor tiles, where such defects are particularly unacceptable. The incorporation of fly ash into porcelain floor tiles, which need to have low water absorption and high flexural strength, is particularly challenging.

The inventors have also seen that this problem is exacerbated when the FBC fly ash is used at higher levels in ceramics applications.

Without wishing to be bound by theory, it is hypothesised that the high energy environment of a typical ceramics production process, and the high level of intense surface/surface contacts between clay and FBC fly ash particles results in the formation of higher levels of specific mineral phases which change the firing behaviour of the material. This in turn, leads to cracking of the ceramic articles.

The inventors have found that by controlling and limiting the proportion of FBC fly ash in a granular ceramic mixture comprising clay, feldspar, and optionally other ingredients, the processing and use of FBC fly ash in ceramics plants is possible and overcomes the problems of incorporating FBC fly ash into the granular ceramic mixture.

The inventors have also found that the overall level of fly ash, including FBC fly ash, being incorporated in the granular ceramic mixture can be increased by the addition of PCC fly ash. By combining both FBC fly ash and PCC fly ash in the same granular ceramic mixture, the total level of fly ash incorporated into the ceramic article can be increased whilst overcomes the problems of incorporating FBC fly ash into the granular ceramic mixture.

CN 104 291 853 B relates to a kind of circulating fluid-bed coal ash ceramic and preparation thereof.

CN 108 191 401 A relates to a method of making ceramics using 30wt%-50wt% fly ash, 5wt%-10wt% clay, 2wt%-40wt% feldspar and other additives up to 100wt%.

US2003/148879 relates to a ceramic material.

### Summary of the invention

The present invention provides a granular ceramic mixture comprising:
(a) from above 0wt% to 30wt% fluid bed combustion fly ash;
(b) from 15wt% to 70wt% clay;
(c) from 0wt% to 35wt% feldspar; and
(d) optionally, other ingredients to 100wt%.

### Detailed description of the invention

### Granular ceramic mixture

The granular ceramic mixture comprises:
(a) from above 0wt% to 30wt% fluid bed combustion fly ash;
(b) from 15wt% to 70wt% clay;
(c) from 0wt% to 35wt, or from 5wt% to 25wt% feldspar; and
(d) optionally, other ingredients to 100wt%.

The granular ceramic mixture may comprise:
(a) from 10wt% to 30wt% fluid bed combustion fly ash;
(b) from 15wt% to 70wt% clay;
(c) from 0wt% to 35wt, or from 5wt% to 25wt% feldspar; and
(d) optionally, other ingredients to 100wt%.

The granular ceramic mixture may comprise:
(a) from above 0wt% to 10wt% fluid bed combustion fly ash;
(b) from 35wt% to 70wt% clay;
(c) from 0wt% to 35wt, or from 5wt% to 25wt% feldspar; and
(d) optionally, other ingredients to 100wt%.

The granular ceramic mixture may comprise from 1wt% to 30wt% fluid bed combustion fly ash, or from 2wt% to 30wt%, or from 3wt% to 30wt%, or from 4wt% to 30wt%, or from 5wt% to 30wt%, or from 6wt% to 30wt%, or from 7wt% to 30wt%, or from 8wt% to 30wt%, or from 9wt% to 30wt%, or from 10wt% to 30wt%, or from 12wt% to 30wt%, or from 15wt% to 30wt% fluid bed combustion fly ash. A preferred fluid bed combustion fly ash is circulating fluid bed combustion fly ash.

The granular ceramic mixture may also comprise from above 0wt% to 50wt% pulverised coal combustion fly ash. The granular ceramic mixture may comprise from 1wt% to 50t% pulverised coal combustion fly ash, or from or from 2wt% to 50wt%, or from 3wt% to 50wt%, or from 4wt% to 50wt%, or from 5wt% to 50wt%, or from 6wt% to 50wt%, or from 7wt% to 50wt%, or from 8wt% to 50wt%, or from 9wt% to 50wt%, or from 10wt% to 50wt%, or from 12wt% to 50wt%, or from 15wt% to 50wt% pulverised coal combustion fly ash.

The granular ceramic mixture may comprise at least 40wt%, or at least 50wt% fly ash that is a combination of fluid bed combustion fly ash and pulverised coal combustion fly ash.

Typically, the maximum amount of fly ash comprised by the granular ceramic mixture is 80wt%, or 75wt%, or 70wt%, or even 65wt%.

### Fluid bed combustion fly ash

Suitable fluid bed combustion fly ash can be atmospheric fluid bed combustion fly ash, pressurized fluid bed combustion fly ash, or a combination thereof.

Suitable fluid bed combustion fly ash can be circulating fluid bed combustion fly ash, bubbling fluid bed combustion fly ash, or a combination thereof.

A preferred fluid bed combustion fly ash is circulating fluid bed combustion fly ash.

Typically, the fluid bed combustion fly ash comprises greater than 5.0wt% oxide of sulfur, or greater than 6.0wt%, or greater than 7.0wt%, or greater than 10wt% oxide of sulfur.

Typically, the fluid bed combustion fly ash is derived from coal, and is typically fluid bed combustion coal fly ash.

### Oxide of sulfur

Analysis of the elemental composition of fly ash is most commonly done by X-ray fluorescence (XRF) techniques. This measures the levels of the heavier elements, such as iron, aluminium, silicon, sulfate and calcium. The convention is that these are then reported as the equivalent level of oxide. Iron levels are reported as Fe₂O₃ even if the iron is not actually in that form. Calcium is reported as CaO and sulfur is reported as SO₃. Hence, a material such as CaSO₄ is typically reported as CaO and SO₃.

SO₃ is often referred to as "sulfate" in the ceramic literature even though the term "sulfate" technically refers to the SO₄²⁻ ion. Sometimes sulfur is reported as elemental sulfur but how the sulfur is reported makes no difference to the actual levels present. The present invention therefore uses the term "oxide of sulfur" to be more general. "Oxide of sulfur", SO₃ and "sulfate" are interchangeable terms when used herein.

The level of oxide of sulfur present in the fly ash can be determined using the following XRF method.

Suitable XRF equipment is the Epsilon 4 XRF analyser from Malvern Panalytical using sample disks prepared using an Aegon 2 automatic fusion equipment for sample disk preparation from Claisse. The ash sample is automatically dissolved in molten lithium borate flux and formed into a disk. This is then placed in the Epsilon 4 for analysis. Equipment should be operated as per manufacturer's instructions. When measuring for SO₃, the Epsilon 4 should be set to a voltage of 4.5 kV, a current of 3000µa, use helium as the medium, not use a filter, and have a measurement time of 450 s.

### Pulverised coal combustion fly ash

Preferably, the pulverised coal combustion fly ash is class F pulverised coal combustion fly ash. Typically, class F pulverised coal combustion fly ash is defined by the method described in ASTM 618.

### Clay

A suitable clay is a standard clay such as Ukrainian clay or illitic clay. A preferred clay is a combination of standard clay and high plasticity clay. The weight ratio of standard clay to high plasticity clay may in the range of from 2:1 to 5:1. A suitable clay is a high plasticity clay such as bentonite clay. Typically, a high plasticity clay has an Attterburg Plasticity Index of greater than 25.0. Typically, a standard clay has an Atterburg Plasticity Index of 25.0 or less. The amount of high plasticity clay can be selected to provide sufficient robustness and flowability for granular ceramic mixtures.

### Feldspar

Suitable feldspars include sodium and/or potassium feldspars.

### Optional other ingredients

Other optional ingredients include chemical additives and binders.

### Process of making a granular ceramic mixture

The process comprises the step of contacting fluid bed combustion fly ash with pulverised coal combustion fly ash, clay and feldspar to form the granular ceramic mixture.

### Examples

Two mixtures were prepared:
**a** 50 parts FBC fly ash, 25 parts illitic clay, 25 parts soda feldspar (comparative); and
**b** 25 parts FBC fly ash, 25 parts PCC fly ash, 25 parts illitic clay, 25 parts soda feldspar (invention).

200g of mix (a) and 200g of mix (b) were placed in separate containers and then milled, wetted and sieved.

140 g of each mix was then uniaxially pressed in a rectangular mild steel mold (155x40mm) to a pressure of 40MPa which was held for 1.5min (90sec). Each formed body was released from the mold and placed into a 110°C oven to dry.

The dried bodies were fired in an electric kiln at a ramp rate of 2.5°C/min to 1160°C. The temperature was held at the top temperature for 30 min. The fired bodies were then allowed to cool down naturally (hence slowly) to room temperature.

No cracking was observed in the fired body made from mix (b) (invention) whereas cracking was observed in the fired body made from mix (a) (comparative).

## Claims

1. A granular ceramic mixture comprising:
(a) from above 0wt% to 30wt% fluid bed combustion fly ash;
(b) from 15wt% to 70wt% clay;
(c) from 0wt% to 35wt% feldspar; and
(d) optionally, other ingredients to 100wt%.

2. A granular ceramic mixture according to claim 1, wherein the granular ceramic mixture comprises:
(a) from 10wt% to 30wt% fluid bed combustion fly ash;
(b) from 15wt% to 70wt% clay;
(c) from 0wt% to 35wt% feldspar; and
(d) optionally, other ingredients to 100wt%.

3. A granular ceramic mixture according to claim 1, wherein the granular ceramic mixture comprises:
(a) from above 0wt% to 10wt% fluid bed combustion fly ash;
(b) from 35wt% to 70wt% clay;
(c) from 0wt% to 35wt% feldspar; and
(d) optionally, other ingredients to 100wt%.

4. A granular ceramic mixture according to any preceding claim, wherein the fluid bed combustion fly ash is circulating fluid bed combustion fly ash.

5. A granular ceramic mixture according to any preceding claim, wherein the fluid bed combustion fly ash comprises greater than 5.0wt% oxide of sulfur.

6. A granular ceramic mixture according to any preceding claim, wherein the fluid bed combustion fly ash comprises at least 10wt% oxide of sulfur.

7. A granular ceramic mixture according to any preceding claim, wherein the granular ceramic mixture comprises from above 0wt% to 50wt% pulverised coal combustion fly ash.

8. A granular ceramic mixture according to claim 7, wherein the pulverised coal combustion fly ash is class F pulverised coal combustion fly ash.

9. A granular ceramic mixture according to any of claims 7-8, wherein the granular ceramic mixture comprises at least 50wt% fly ash that is a combination of fluid bed combustion fly ash and pulverised coal combustion fly ash.

10. A process of making a ceramic granular ceramic mixture according to any of claims 7-9, wherein the process comprises the step of contacting fluid bed combustion fly ash with pulverised coal combustion fly ash, clay and feldspar to form the granular ceramic mixture.

## Patentansprüche

1. Körnige keramische Mischung, umfassend:
(a) von über 0 Gew.-% bis 30 Gew.-% Flugasche aus Wirbelschichtverbrennung;
(b) von 15 Gew.-% bis 70 Gew.-% Ton;
(c) von 0 Gew.-% bis 35 Gew.-% Feldspat; und
(d) optional andere Inhaltsstoffe auf 100 Gew.-%.

2. Körnige keramische Mischung nach Anspruch 1, wobei die körnige keramische Mischung Folgendes umfasst:
(a) von 10 Gew.-% bis 30 Gew.-% Flugasche aus Wirbelschichtverbrennung;
(b) von 15 Gew.-% bis 70 Gew.-% Ton;
(c) von 0 Gew.-% bis 35 Gew.-% Feldspat; und
(d) optional andere Inhaltsstoffe auf 100 Gew.-%.

3. Körnige keramische Mischung nach Anspruch 1, wobei die körnige keramische Mischung Folgendes umfasst:
(a) von über 0 Gew.-% bis 10 Gew.-% Flugasche aus Wirbelschichtverbrennung;
(b) von 35 Gew.-% bis 70 Gew.-% Ton;
(c) von 0 Gew.-% bis 35 Gew.-% Feldspat; und
(d) optional andere Inhaltsstoffe auf 100 Gew.-%.

4. Körnige keramische Mischung nach einem vorhergehenden Anspruch, wobei die Flugasche aus Wirbelschichtverbrennung zirkulierende Flugasche aus Wirbelschichtverbrennung ist.

5. Körnige keramische Mischung nach einem vorhergehenden Anspruch, wobei die Flugasche aus Wirbelschichtverbrennung mehr als 5,0 Gew.-% Schwefeloxid umfasst.

6. Körnige keramische Mischung nach einem vorhergehenden Anspruch, wobei die Flugasche aus Wirbelschichtverbrennung mindestens 10 Gew.-% Schwefeloxid umfasst.

7. Körnige keramische Mischung nach einem vorhergehenden Anspruch, wobei die körnige keramische Mischung von über 0 Gew.-% bis 50 Gew.-% pulverisierte Flugasche aus Kohleverbrennung umfasst.

8. Körnige keramische Mischung nach Anspruch 7, wobei die pulverisierte Flugasche aus Kohleverbrennung pulverisierte Flugasche aus Kohleverbrennung der Klasse F ist.

9. Körnige keramische Mischung nach einem der Ansprüche 7-8, wobei die körnige keramische Mischung mindestens 50 Gew.-% Flugasche umfasst, die eine Kombination aus Flugasche aus Wirbelschichtverbrennung und pulverisierter Flugasche aus Kohleverbrennung ist.

10. Verfahren zur Herstellung einer keramischen körnigen keramischen Mischung nach einem der Ansprüche 7-9, wobei das Verfahren den Schritt des Kontaktierens von Flugasche aus Wirbelschichtverbrennung mit pulverisierter Flugasche aus Kohleverbrennung, Ton und Feldspat umfasst, um die körnige keramische Mischung zu bilden.

## Revendications

1. Mélange céramique granulaire comprenant :
(a) de plus de 0 % en poids à 30 % en poids de cendres volantes de combustion en lit fluidisé ;
(b) de 15 % en poids à 70 % en poids d'argile ;
(c) de 0 % en poids à 35 % en poids de feldspath ; et
(d) éventuellement, d'autres ingrédients jusqu'à 100 % en poids.

2. Mélange céramique granulaire selon la revendication 1, dans lequel le mélange céramique granulaire comprend :
(a) de 10 % en poids à 30 % en poids de cendres volantes de combustion en lit fluidisé ;
(b) de 15 % en poids à 70 % en poids d'argile ;
(c) de 0 % en poids à 35 % en poids de feldspath ; et
(d) éventuellement, d'autres ingrédients jusqu'à 100 % en poids.

3. Mélange céramique granulaire selon la revendication 1, dans lequel le mélange céramique granulaire comprend :
(a) de plus de 0 % en poids à 10 % en poids de cendres volantes de combustion en lit fluidisé ;
(b) de 35 % en poids à 70 % en poids d'argile ;
(c) de 0 % en poids à 35 % en poids de feldspath ; et
(d) éventuellement, d'autres ingrédients jusqu'à 100 % en poids.

4. Mélange céramique granulaire selon l'une quelconque des revendications précédentes, dans lequel les cendres volantes de combustion en lit fluidisé sont des cendres volantes de combustion en lit fluidisé en circulation.

5. Mélange céramique granulaire selon l'une quelconque des revendications précédentes, dans lequel les cendres volantes de combustion en lit fluidisé comprennent plus de 5,0 % en poids d'oxyde de soufre.

6. Mélange céramique granulaire selon l'une quelconque des revendications précédentes, dans lequel les cendres volantes de combustion en lit fluidisé comprennent au moins 10 % en poids d'oxyde de soufre.

7. Mélange céramique granulaire selon l'une quelconque des revendications précédentes, dans lequel le mélange céramique granulaire comprend de plus de 0 % en poids à 50 % en poids de cendres volantes de combustion de charbon pulvérisé.

8. Mélange céramique granulaire selon la revendication 7, dans lequel les cendres volantes de combustion de charbon pulvérisé sont des cendres volantes de combustion de charbon pulvérisé de classe F.

9. Mélange céramique granulaire selon l'une quelconque des revendications 7 à 8, dans lequel le mélange céramique granulaire comprend au moins 50 % en poids de cendres volantes qui sont une combinaison de cendres volantes de combustion en lit fluidisé et de cendres volantes de combustion de charbon pulvérisé.

10. Procédé de fabrication d'un mélange céramique granulaire céramique selon l'une quelconque des revendications 7 à 9, dans lequel le procédé comprend l'étape de mise en contact des cendres volantes de combustion en lit fluidisé avec des cendres volantes de combustion de charbon pulvérisé, de l'argile et du feldspath pour former le mélange céramique granulaire.
